# EUROPÄISCHE PATENTANMELDUNG

(11) **EP 1 832 199 A2**
(43) Veröffentlichungstag der Anmeldung: **12.09.2007**
(21) Anmeldenummer: 07103666.9
(22) Anmeldetag: 07.03.2007
(51) Int. Cl.: A47B 77/00, A47B 77/08, A47B 88/00, A47B 67/04, A47B 71/00, F16B 12/32, F25D 23/06, F25D 23/08, F25D 25/02

(54) **Möbel zur Aufnahme von Lebensmitteln und/oder hygienekritischen Gütern**

(30) Priorität: 10.03.2006 DE 202006003964 U
(71) Anmelder: EmoTec GmbH, 26188 Edewecht-Jeddeloh 1 (DE)
(72) Erfinder: Budde, Heinrich, 49429 Visbek (DE)
(74) Vertreter: Gültzow, Marc

(57) **Zusammenfassung**

Die Erfindung betrifft Möbel zur Aufnahme von Lebensmitteln und/oder hygienekritischen Gütern, mit einem Boden (50) und mindestens einer Seitenwand (30,40) und einem Material (61) an den Übergängen zwischen dem Boden und den Seitenwänden, wobei das Material auf einem silanmodifizierten Polymer basiert und im Wesentlichen geruchs- und geschmacksneutral ist.

Es ist Aufgabe der vorliegenden Erfindung, ein Möbel zur Aufnahme von Lebensmitteln und/oder hygienekritischen Gütern vorzusehen, welches leichter zu reinigen ist.

## Beschreibung

Die vorliegende Anmeldung betrifft Möbel zur Aufnahme von Lebensmitteln und/oder hygienekritischen Gütern.

Bei derartigen Möbeln erweist es sich oftmals als schwierig, sowohl Eckbereiche als auch Randbereiche hygienisch sauber zu halten. Insbesondere die Übergangsbereiche zwischen den verschiedenen Elementen eines Möbels können sich als kritisch hinsichtlich der Bakterienbildung oder Schimmelbildung erweisen.

Aus der DE 10 2004 004 353 A1 ist ein Edelstahlmöbel für den Einsatz in hygienekritischen Bereichen bekannt. Das Edelstahlmöbel wird aus Blechteilen aufgebaut, welche durch zusammenwirkende Vorsprünge und Ausnehmungen formschlüssig miteinander verbunden werden. Die Vorsprünge sind knaggenartig ausgebildet.

Die DE 203 14 183 U1 zeigt ein Möbel zur Aufnahme von Lebensmitteln. Das Möbel weist mindestens einen Korpus sowie darin angeordnete Elemente wie beispielsweise ein Regal auf. Die Elemente sind dabei selbsttragend ausgebildet.

Das Element kann als ein Teil aus dem Korpus herausgenommen werden. Das Element bzw. das Regal ist dazu ausgestaltet, Schubladen aufzunehmen.

Es ist somit Aufgabe der vorliegenden Erfindung, ein Möbel zur Aufnahme von Lebensmitteln und/oder hygienekritischen Gütern vorzusehen, welches leichter zu reinigen ist.

Diese Aufgabe wird durch ein Möbel gemäß Anspruch 1, durch eine Regalierung gemäß Anspruch 5 und durch eine Schublade gemäß Anspruch 19 gelöst..

Somit wird ein Möbel zur Aufnahme von Lebensmitteln und/oder hygienekritischen Gütern vorgesehen. Das Möbel weist einen Boden und mindestens eine Seitenwand auf. An den Übergängen zwischen dem Boden und den Seitenwänden wird ein Material basierend auf einem silanmodifizierten Polymer aufgetragen, welches im Wesentlichen geruchs- und geschmacksneutral ist.

Das Möbel kann ferner einen geneigten Boden aufweisen, wobei der Boden vorzugsweise nach vorne geneigt ist.

Die Erfindung betrifft ferner eine Regalierung für ein Möbel zur Aufnahme von Lebensmitteln und/oder hygienekritischen Gütern. Die Regalierung weist einen einstückigen selbsttragenden Rahmen auf, welcher aus einer Rückwand und zwei Seitenwänden gebildet wird. Die Seitenwände weisen jeweils mehrere Querstreben auf. An zwei korrespondierenden Querstreben in jeder Seitenwand sind mindestens zwei Öffnungen zur Aufnahme von Befestigungsschienen vorgesehen. Gemäß einem Aspekt der Erfindung weist der Rahmen zwei vordere und zwei hintere Füße auf, wobei sich die Längen der Füße unterscheiden.

Die Erfindung betrifft ebenfalls ein Möbel mit einem ersten flächigen Element, welches eine Vielzahl von Knaggen aufweist, und ein zweites flächiges Element, welches mindestens eine Ausnehmung aufweist. Die Knagge kann durch die Ausnehmung hindurch gesteckt werden und mittels eines Formteils befestigt werden, so dass eine formschlüssige Verbindung zwischen dem ersten flächigen Element und dem zweiten flächigen Element hergestellt wird.

Die Erfindung betrifft ebenfalls ein Möbel zur Aufnahme von Lebensmitteln und/oder hygienischen Gütern. Das Möbel weist ein Kühlfach, ein Maschinenfach und eine Trennwand zwischen dem Kühlfach und dem Maschinenfach auf. An der Trennwand wird ein Verdampfer angeordnet, welcher über einen ersten und zweiten Anschluss mit dem Maschinenfach verbunden ist.

Die Erfindung betrifft ebenfalls eine Schublade zur Aufnahme von Lebensmitteln und/oder hygienischen Gütern. Die Schublade weist eine erste und zweite Seitenwand auf. Die Seitenwand weist an ihrer oberen Seite mindestens zwei Einkerbungen auf. Die Schubladeneinheit weist ferner mindestens zwei Querstreben auf, welche in die Einkerbungen eingesteckt werden können.

Weitere Aspekte der Erfindung sind Gegenstand der Unteransprüche.

Die Ausführungsbeispiele und Vorteile der Erfindung werden anhand der beigefügten Zeichnungen näher erläutert.
- Fig. 1: zeigt eine perspektivische Darstellung eines Möbels gemäß einem ersten Ausführungsbeispiel,
- Fig. 2a: zeigt eine perspektivische Darstellung eines Kühlmöbels gemäß einem zweiten Ausführungsbeispiel,
- Fig. 2b: zeigt eine weitere perspektivische Ansicht des Kühlmöbels von Fig. 2a,
- Fig. 2c: zeigt eine weitere perspektivische Ansicht des Kühlmöbels von Fig. 2a,
- Fig. 2d: zeigt eine weitere perspektivische Ansicht des Kühlmöbels von Fig. 2a,
- Fig. 2e: zeigt eine weitere perspektivische Ansicht des Kühlmöbels von Fig. 2d,
- Fig. 3a: Fig. 3a zeigt eine perspektivische Ansicht eines Rahmens der Regalierung von Fig. 2e,
- Fig. 3b: Fig. 3b zeigt eine perspektivische Ansicht des Rahmens von Fig. 3a mit einigen Auszügen,
- Fig. 3c: zeigt eine perspektivische Ansicht des Rahmens von Fig. 3a mit einem Vollauszug 310,
- Fig. 3d: zeigt eine weitere perspektivische Ansicht des Rahmens von Fig. 3c,
- Fig. 3e: zeigt eine weitere perspektivische Ansicht eines Rahmens mit drei Vollauszügen,
- Fig. 3f: zeigt eine perspektivische Ansicht eines Vollauszuges von Fig. 3c,
- Fig. 3g: zeigt eine perspektivische Ansicht aller Bauteile des Vollauszuges 310,
- Fig. 3h: zeigt eine weitere perspektivische Ansicht der Elemente des Auszuges 310,
- Fig. 3i: zeigt eine perspektivische Ansicht der Schublade von Fig. 3d,
- Fig. 4a: zeigt eine perspektivische Ansicht eines Rahmens für eine Regalierung gemäß einem vierten Ausführungsbeispiel,
- Fig. 4b: zeigt eine perspektivische Ansicht eines Rahmens von Fig. 4a mit drei Speisebehältern,
- Fig. 4c: zeigt eine perspektivische Ansicht einer Schublade gemäß dem dritten Ausführungsbeispiel mit einigen Speisebehältern,
- Fig. 4d: zeigt eine weitere Ansicht der Schublade gemäß dem dritten Ausführungsbeispiel mit einigen Speisebehältern,
- Fig. 4e: zeigt eine weitere perspektivische Ansicht einer Schublade gemäß dem dritten Ausführungsbeispiel mit zwei Speisebehältern,
- Fig. 4f: zeigt eine weitere perspektivische Ansicht der Schublade gemäß dem dritten Ausführungsbeispiel,
- Fig. 4g: zeigt eine perspektivische Ansicht der Schublade gemäß dem dritten Ausführungsbeispiel mit zwei Speisebehältern,
- Fig. 4h: zeigt eine weitere perspektivische Ansicht der Schublade mit vier Speisebehältern,
- Fig. 4i: zeigt eine weitere perspektivische Ansicht einer Schublade mit einem einzigen Speisebehälter,
- Fig. 4j: zeigt eine weitere perspektivische Ansicht einer Schublade mit einer Vielzahl von Speisebehältern,
- Fig. 5a: zeigt eine perspektivische Ansicht eines Ausschnittes des Kühlmöbels von Fig. 2 gemäß einem fünften Ausführungsbeispiel,
- Fig. 5b: zeigt eine weitere Ansicht einer perspektivischen Darstellung eines Ausschnitts einer Verbindung von zwei Blechteilen,
- Fig. 5c: zeigt eine Schnittansicht der Verbindungsstelle von Fig. 5b,
- Fig. 6a: zeigt einen Abschnitt des Kühlmöbels von Fig. 2b,
- Fig. 6b: zeigt eine weitere Ansicht des Abschnitts von Fig. 6a, und
- Fig. 6c: zeigt eine weitere Ansicht des Abschnitts von Fig. 6b.

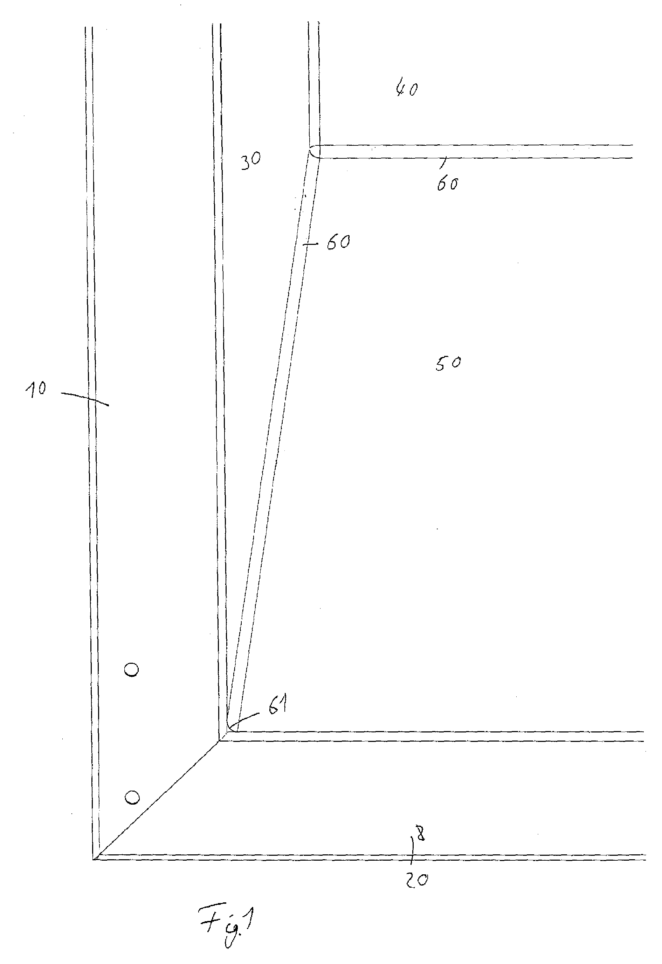

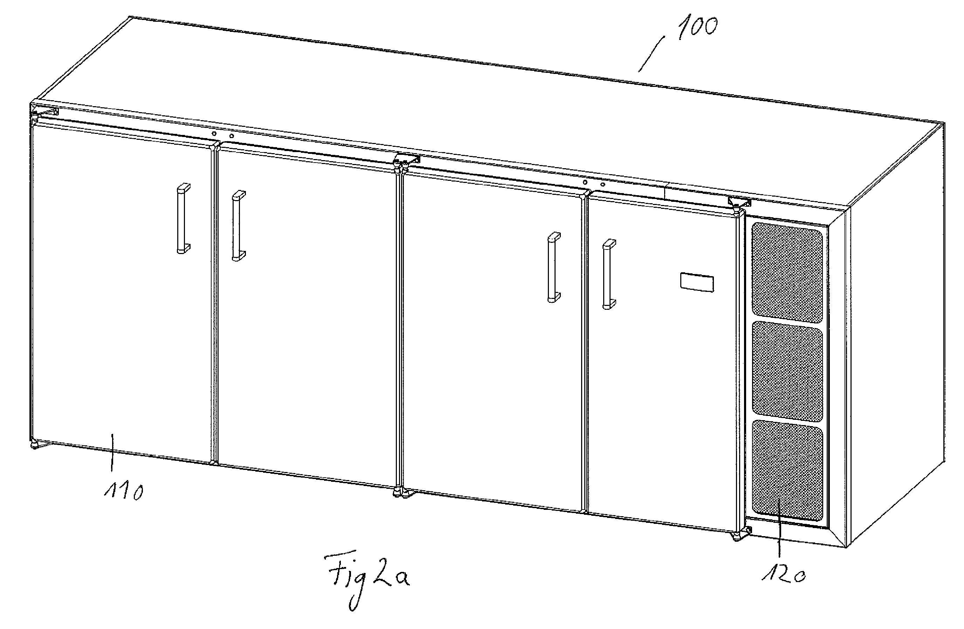

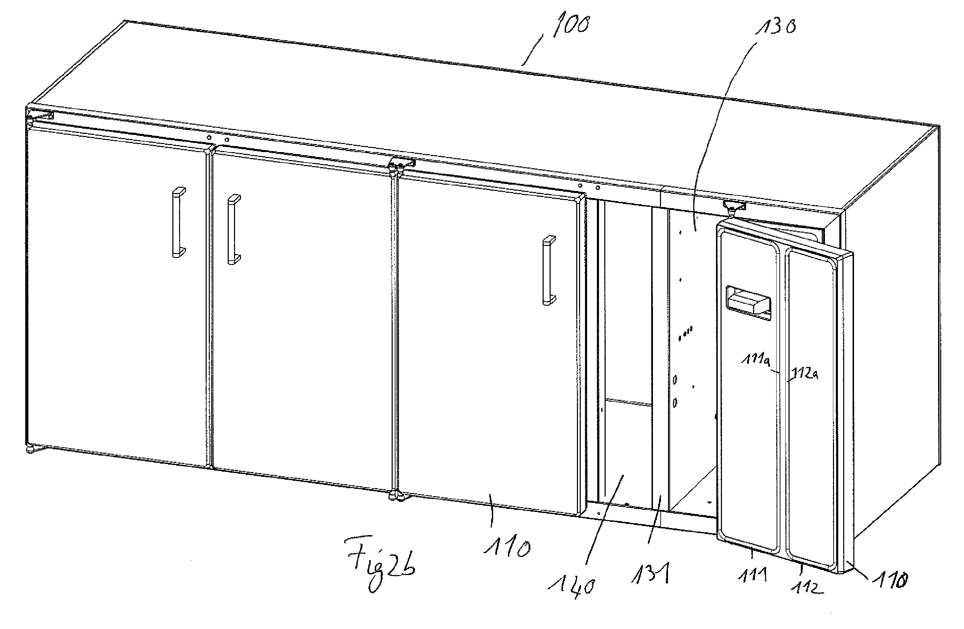

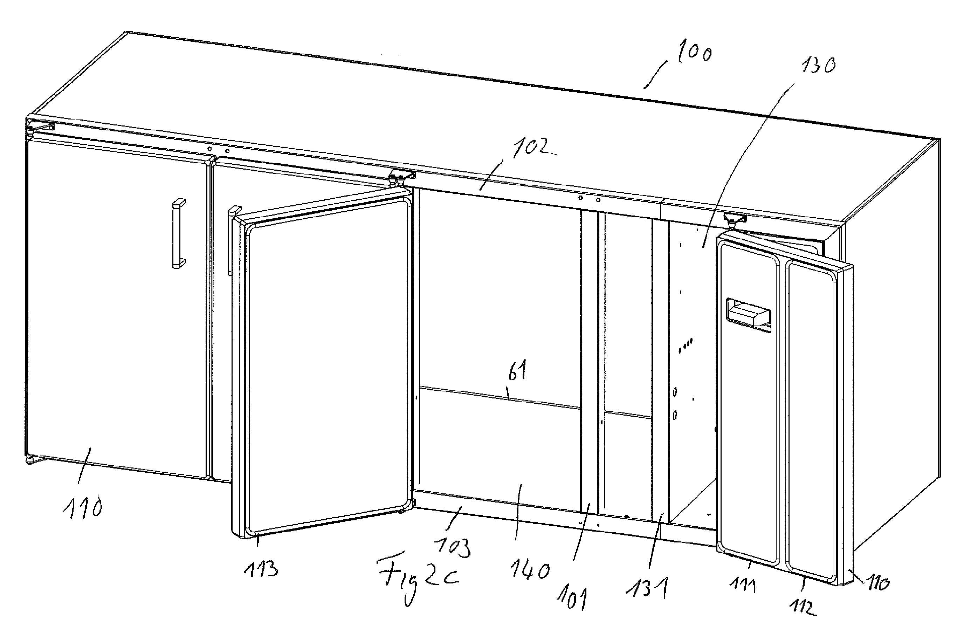

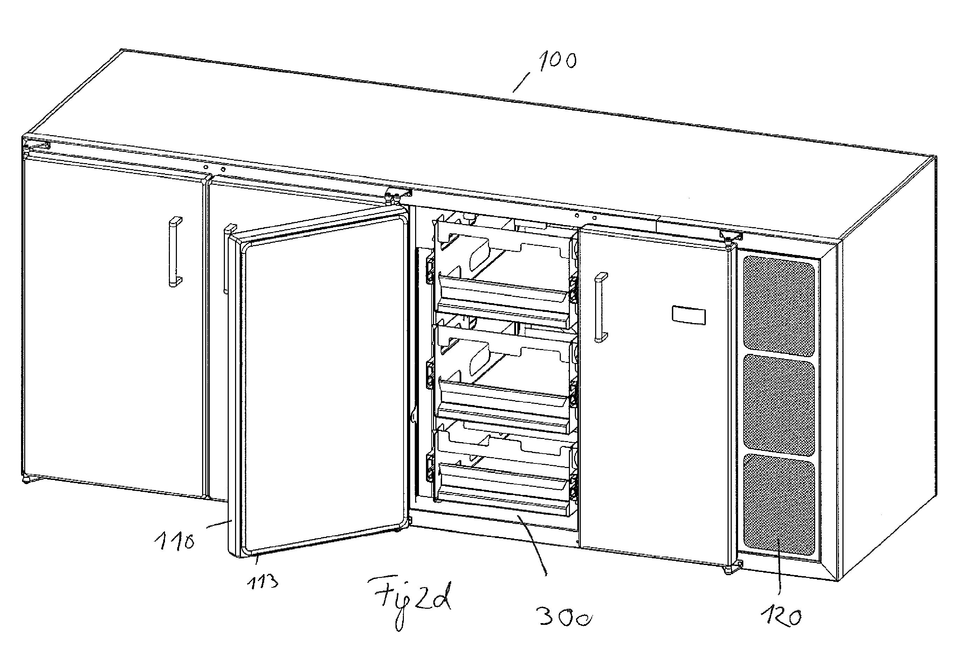

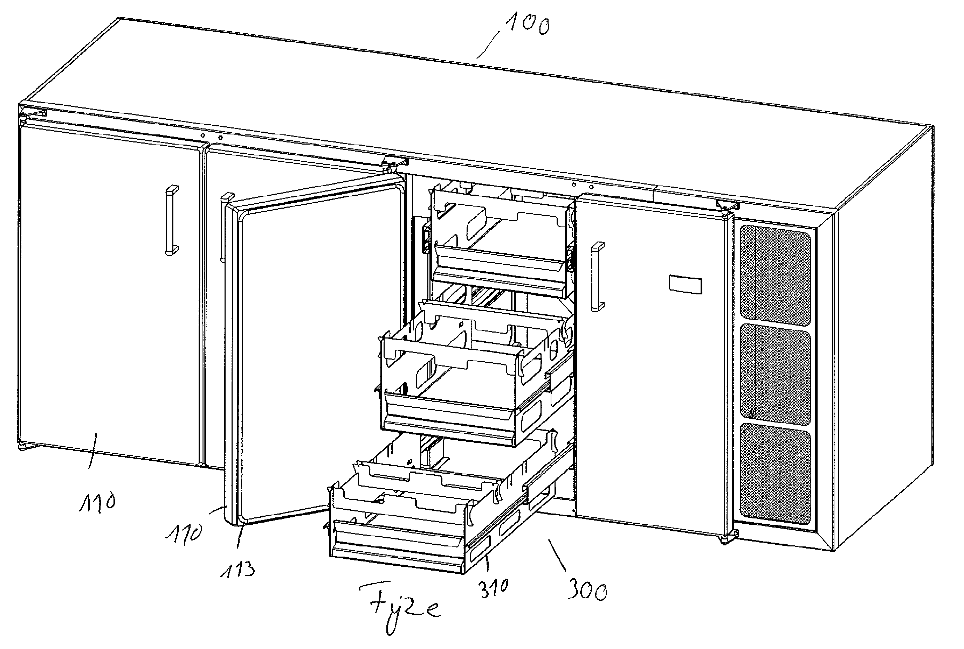

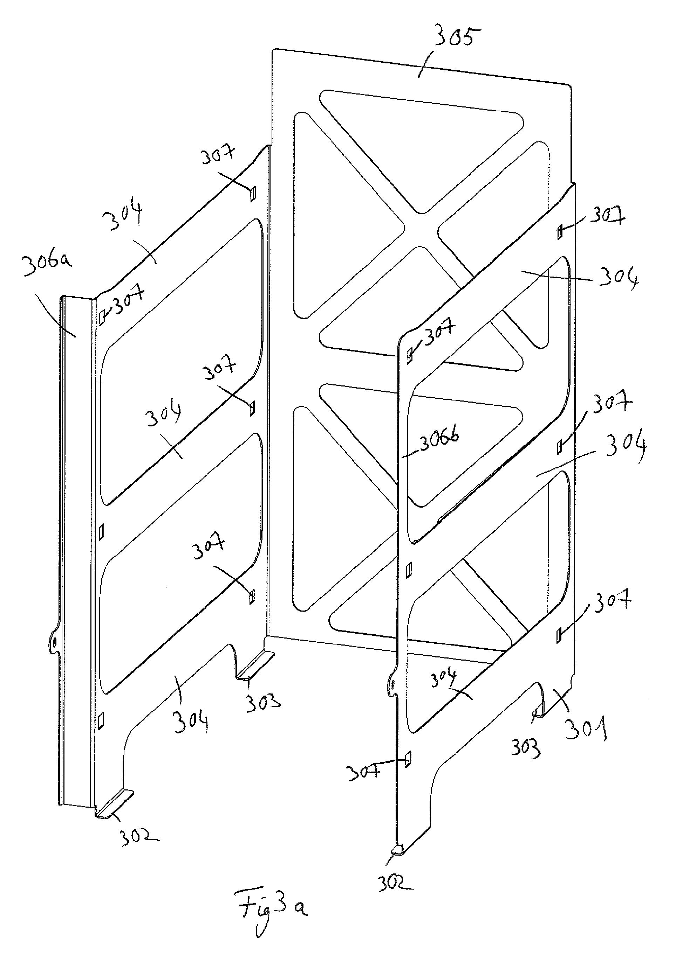

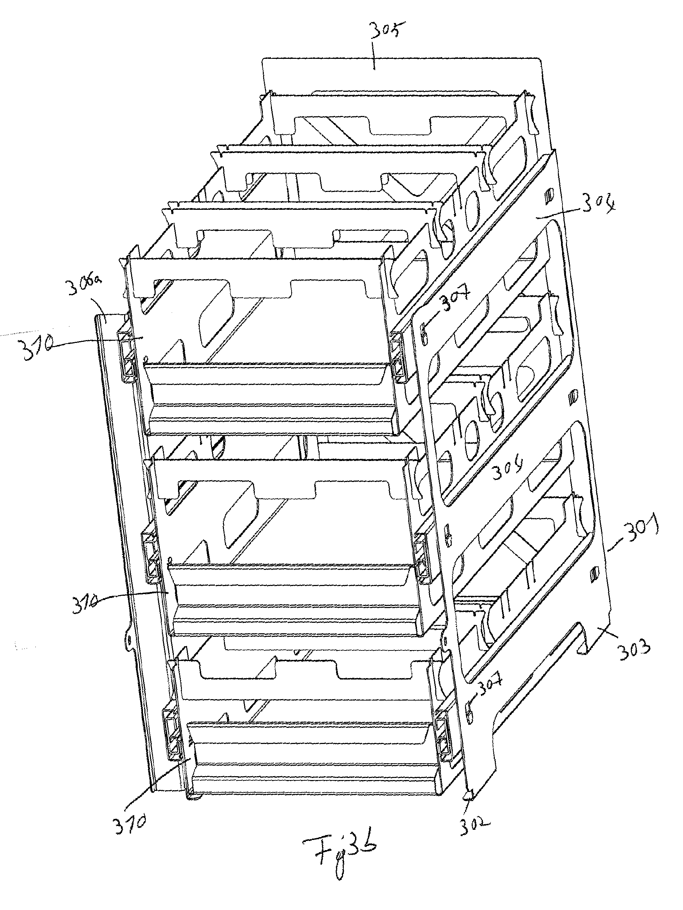

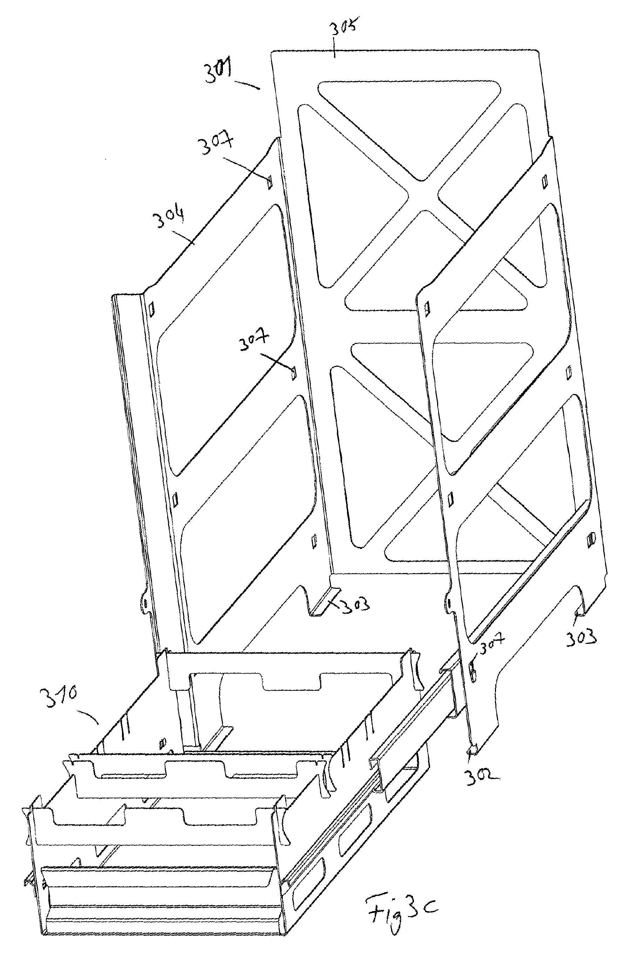

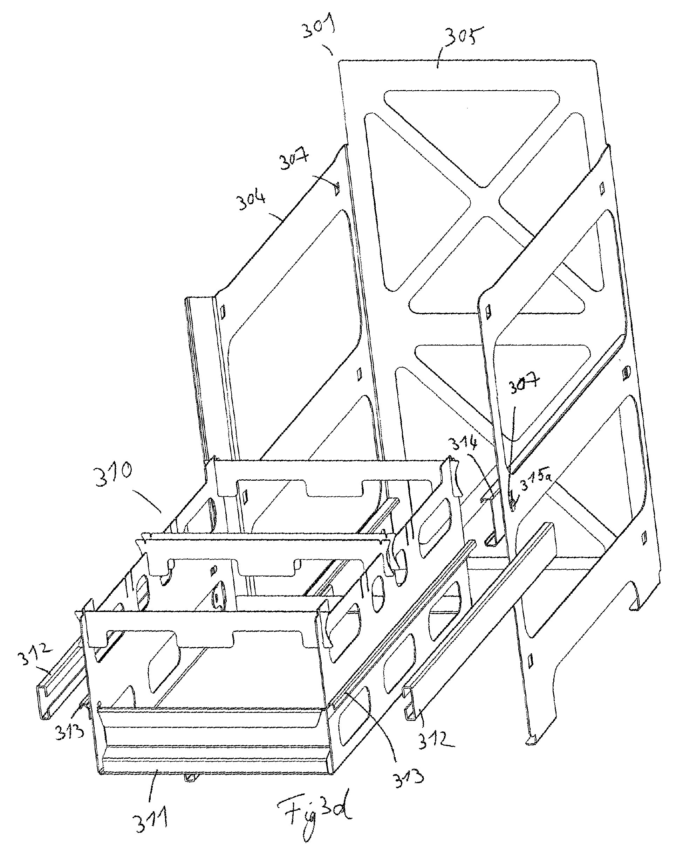

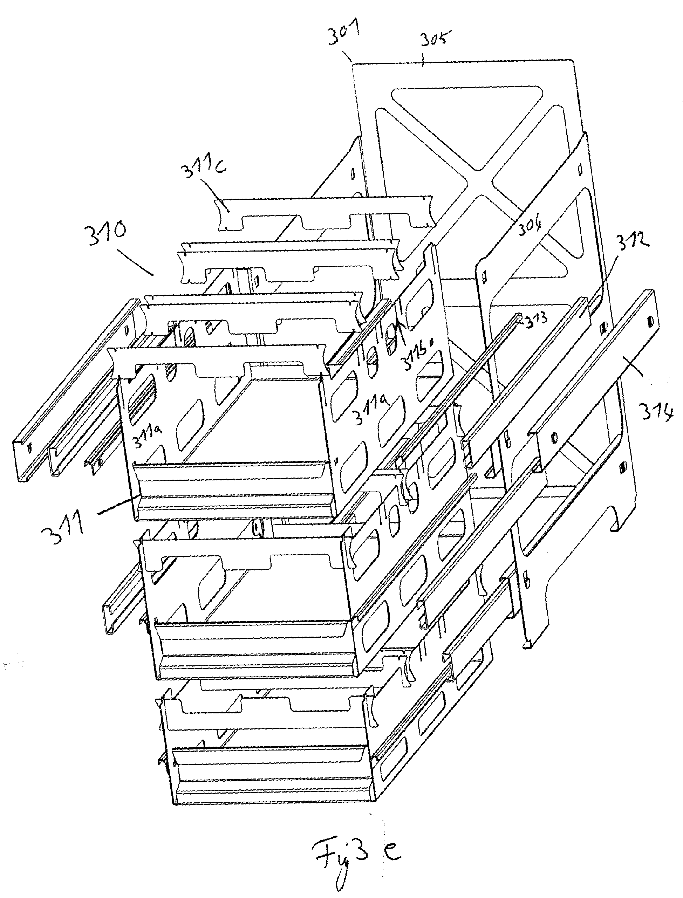

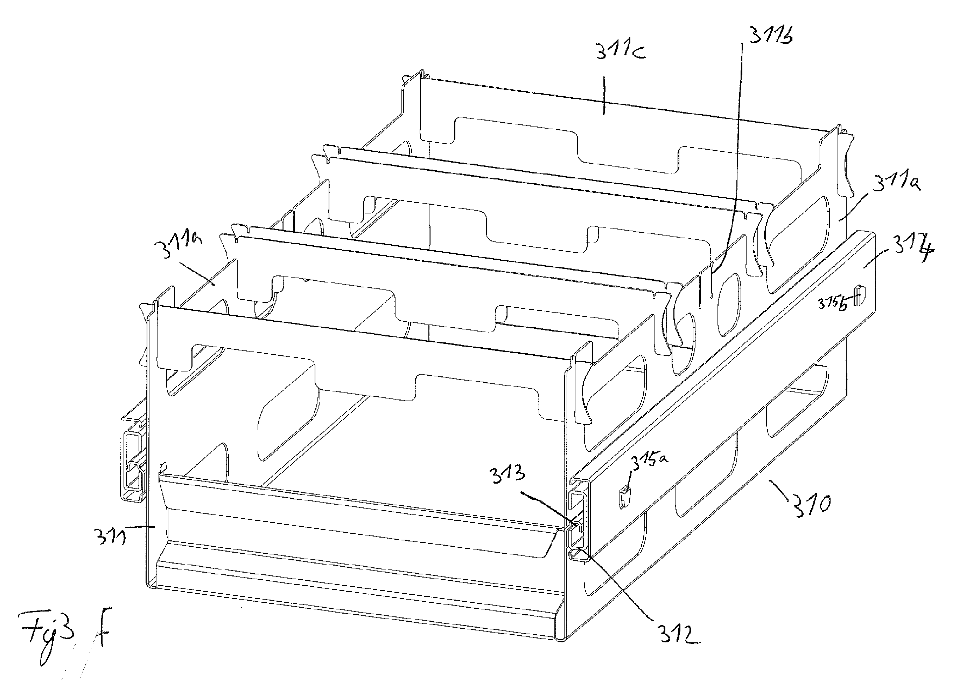

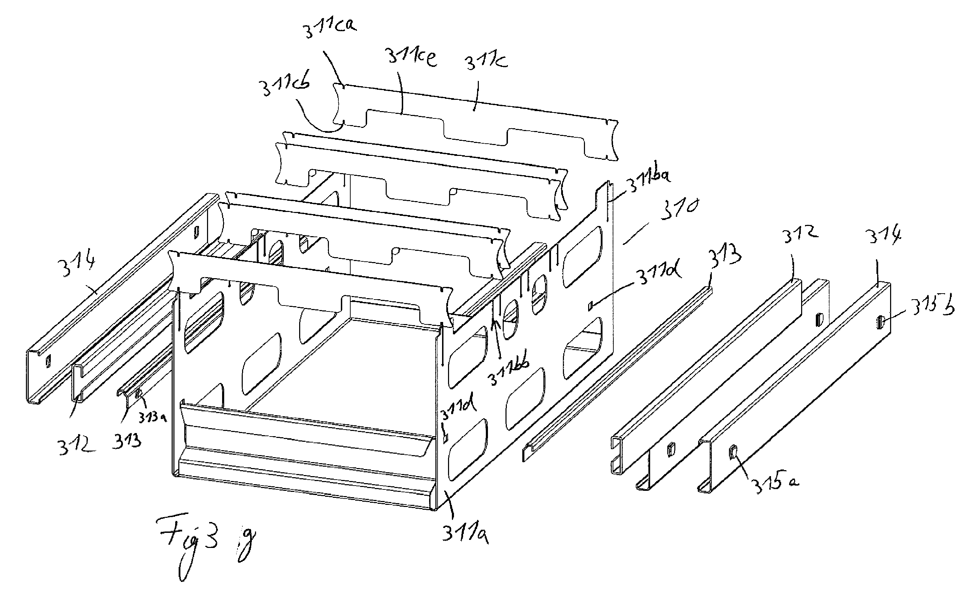

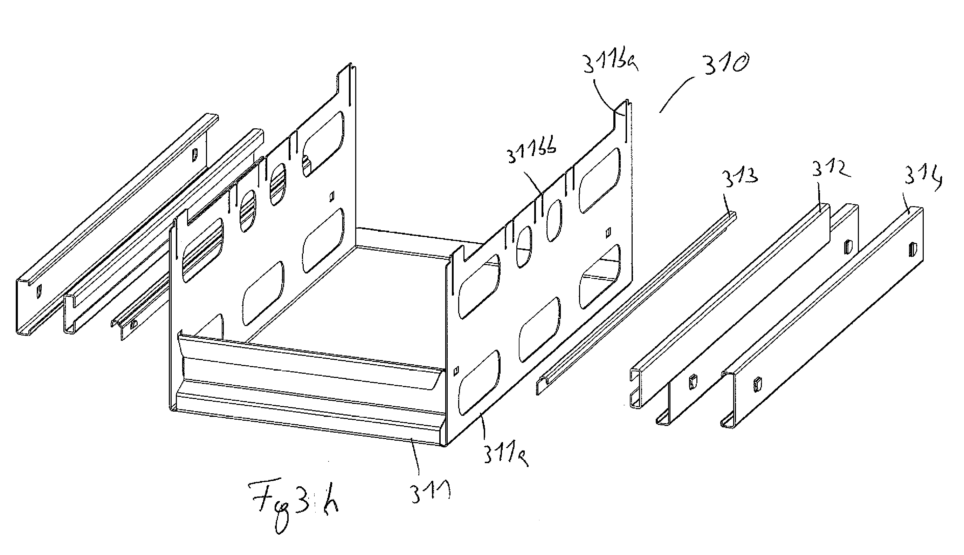

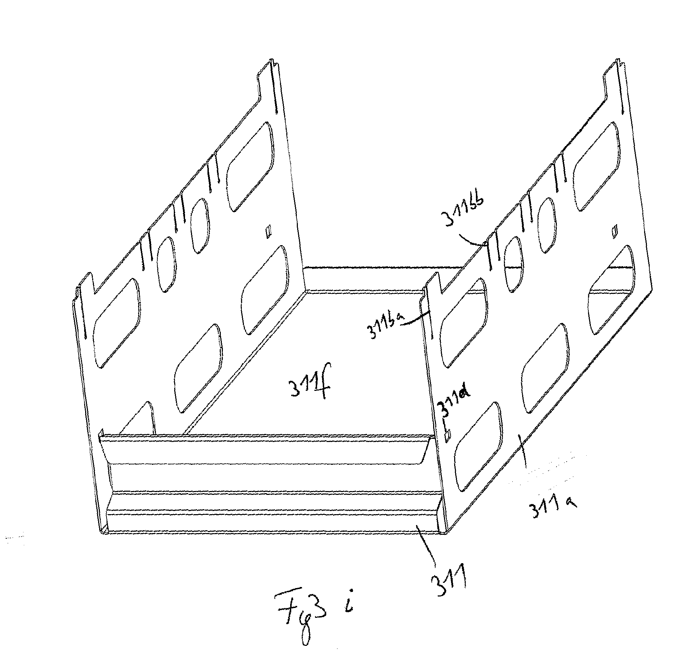

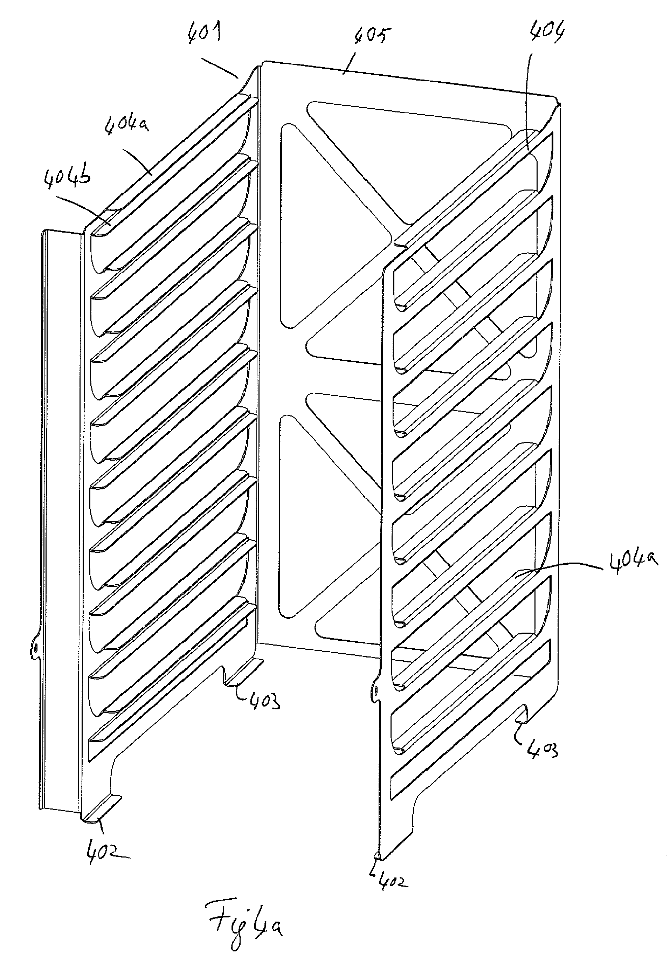

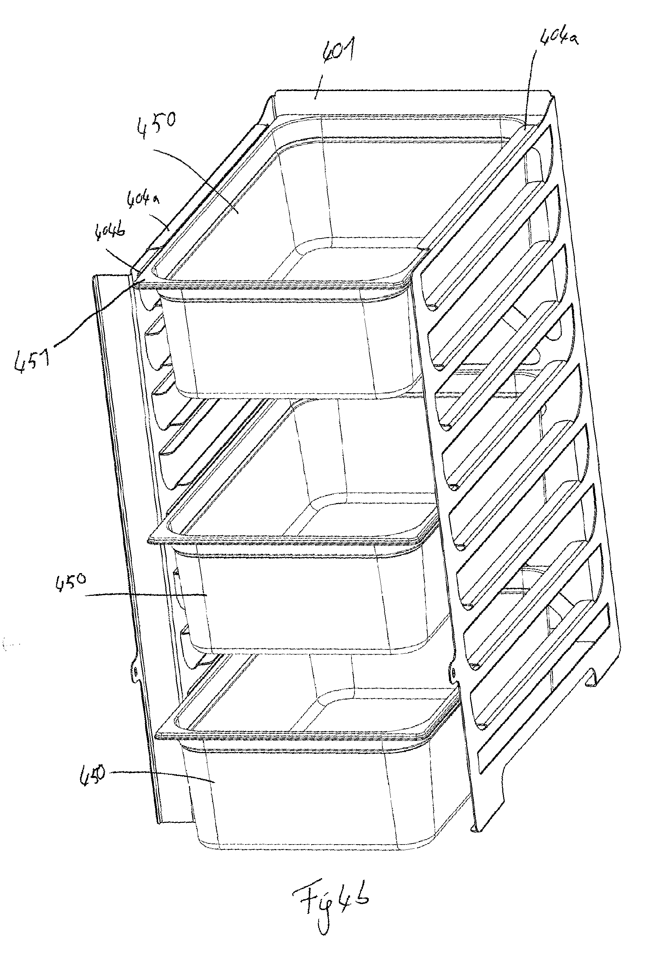

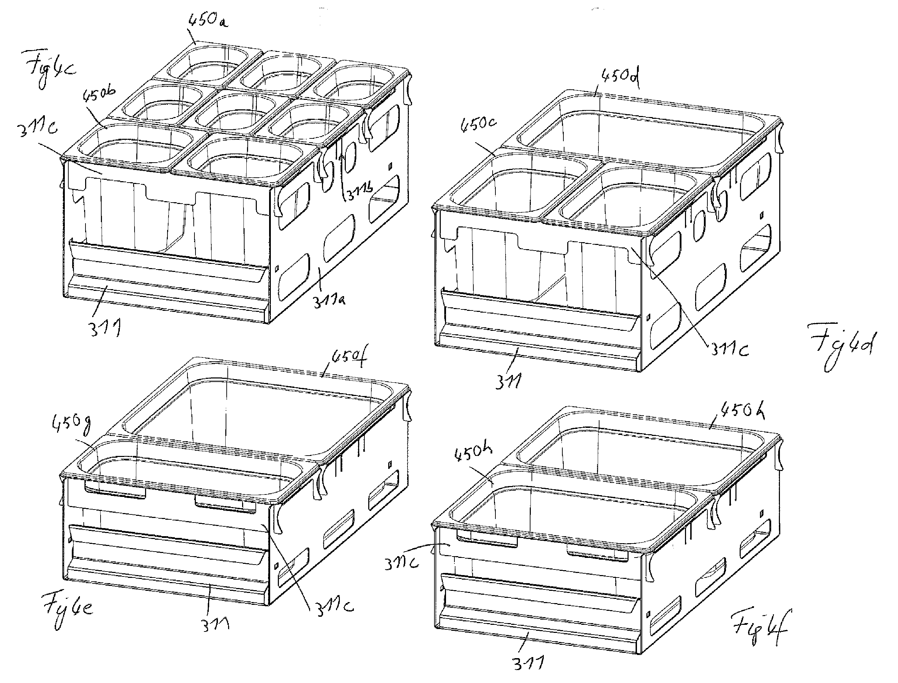

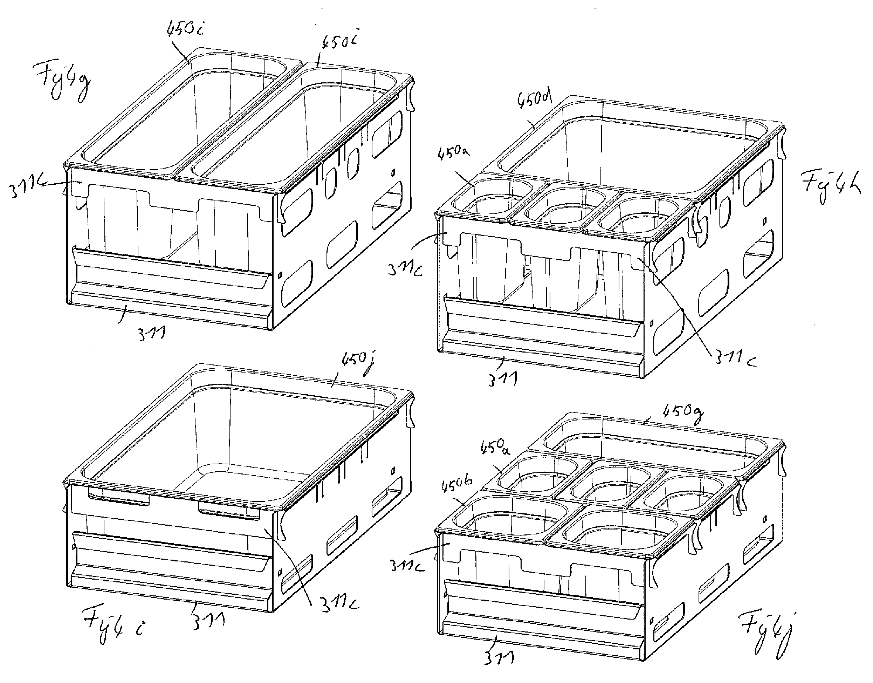

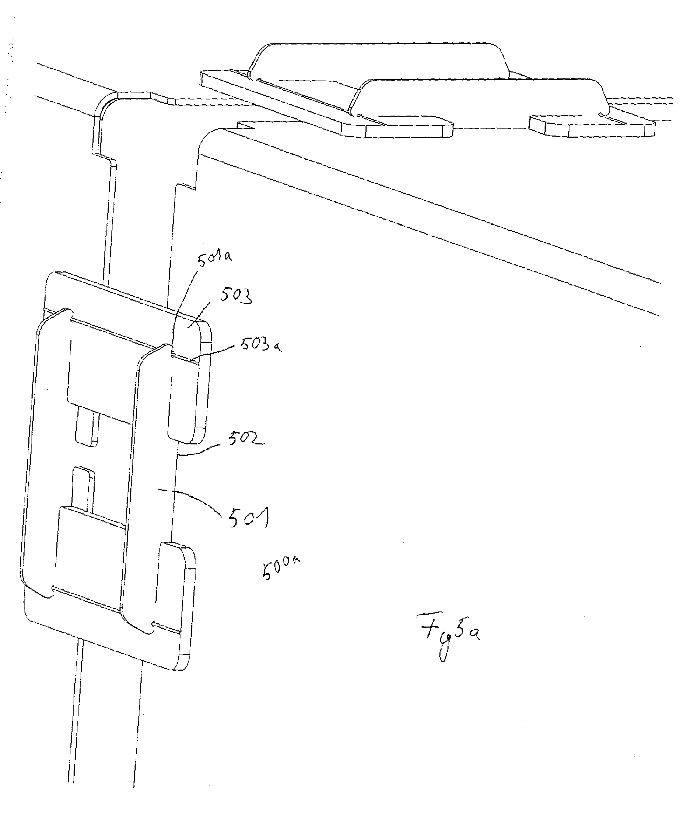

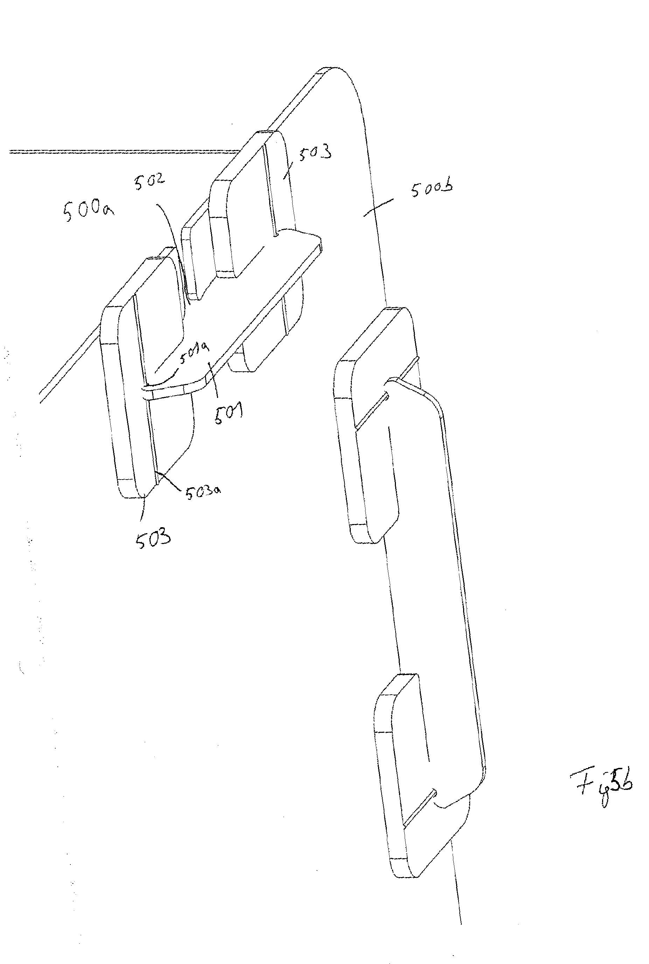

Fig. 1 zeigt eine perspektivische Darstellung eines Möbels gemäß einem ersten Ausführungsbeispiel. Das Möbel weist einen vorderen Rahmen 10, 20, einen Boden 50 sowie Seitenwände 30 und 40 auf. Somit sind zwischen den Seitenwänden 30, 40 und dem Boden 50 Übergänge 60 vorhanden. Die verschiedenen Wände sowie der Boden des Möbels werden durch Einfügen von Klemmstücken hergestellt. Zusätzlich oder alternativ dazu kann eine Verbindung ebenfalls durch Punktschweißen erfolgen. Die Klemmstücke können hierbei aus Metall, aus Nichteisenmetallen sowie aus Kunststoffen hergestellt werden. Auf der Innenseite des Möbels wird ein Einkomponentenmaterial 61 auf Basis eines silanmodifizierten Polymers an den Übergängen zwischen den Wänden 30, 40 und dem Boden 50 vorgesehen. Das aufgetragene Einkomponentenmaterial 61 weist vorzugsweise einen Übergangsradius größer R3 auf. Nachdem das Einkomponentenmaterial bzw. der Dichtstoff oder der Klebstoff abgebunden ist, ist das Material geruchs- und geschmacksneutral. Durch das Vorsehen des Einzelkomponentenmaterials an den Übergängen zwischen den Wänden und dem Boden, insbesondere durch Vorsehen eines Übergangsradius größer als R3, kann eine Ansammlung von Mikroorganismen an diesen Übergangsbereichen wirkungsvoll vermindert bzw. unterdrückt werden.

Somit können die Übergänge zwischen den Wänden und dem Boden des Möbels nachträglich versiegelt werden.

Vorzugsweise werden alle Innenkanten des Möbels mit Einkomponentenmaterial 61 auf Basis eines silanmodifizierten Polymers vorgesehen.

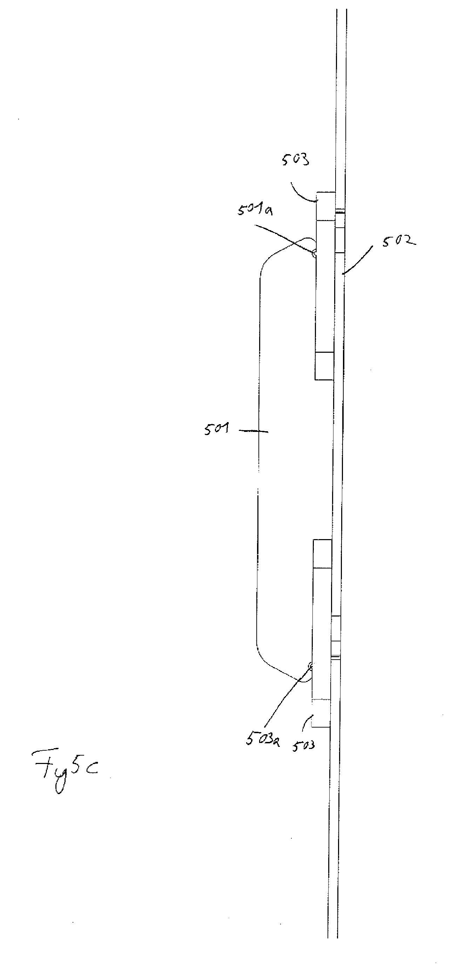

Fig. 2a zeigt eine perspektivische Darstellung eines Kühlmöbels gemäß einem zweiten Ausführungsbeispiel. Das Kühlmöbel 100 weist an seiner Vorderseite mehrere Türen 110 sowie Lüftungsöffnungen 120 für ein Maschinenfach auf.

Fig. 2b zeigt eine weitere perspektivische Ansicht des Kühlmöbels von Fig. 2a. Hier ist die rechte Tür 110 geöffnet dargestellt. Mittels einer Trennwand 131 ist ein Maschinenfach 130 von den Kühlfächern 140 abgetrennt. Die Tür des Maschinenfaches 130 weist an ihrer Innenseite Dichtungen 111, 112 auf, welche derart ausgestaltet sind, dass die Dichtungsabschnitte 111a und 112a im geschlossenen Zustand der Tür an der Trennwand 131 anliegen. Somit wird gewährleistet, dass das Maschinenfach 130 und das Kühlfach 140 jeweils unabhängig voneinander abgedichtet werden.

Die Ausgestaltung der beiden Dichtungen 111, 112 erlaubt eine Abdichtung bzw. Trennung zwischen dem hygienischen Bereich, d. h. dem Kühlfach 140, und dem nicht-hygienischen Bereich, d. h. dem Maschinenfach 130.

Fig. 2c zeigt eine weitere perspektivische Ansicht des Kühlmöbels von Fig. 2a. In dieser Darstellung ist eine weitere Tür 110 geöffnet dargestellt. Diese Tür weist ebenfalls eine Dichtung 113 auf, welche derart ausgestaltet ist, dass sie an dem vorderen Rahmen 102, 103 sowie an der Querstrebe 101 abdichtet, wenn die Tür geschlossen ist. Ferner ist die Trennwand 131 gezeigt, welche das Maschinenfach 130 von dem Kühlfach 140 abgrenzt. Die Übergänge zwischen dem Boden des Kühlmöbels und den Außenwänden des Kühlmöbels sind vorzugsweise mit einem Einkomponentendichtstoff-Klebstoff 61 auf Basis eines silanmodifizierten Polymers gemäß dem ersten Ausführungsbeispiel abgedichtet.

Fig. 2d zeigt eine weitere perspektivische Ansicht des Kühlmöbels von Fig. 2a. In dieser Ansicht ist eine Tür 110 geöffnet, und eine Regalierung 300 ist in dem Kühlfach 140 angeordnet.

Die Regalierung 300 weist drei Schubladen auf, so dass diese Schubladen unabhängig voneinander geöffnet und geschlossen werden können. Die Tür 110 schließt den Abschnitt des Kühlfaches ab, in welchem sich die Regalierung befindet.

Fig. 2e zeigt eine weitere perspektivische Ansicht des Kühlmöbels von Fig. 2d. Hier ist die Regalierung 300 mit drei Auszügen 310 gezeigt, wobei ein Auszug halb und ein weiterer ganz ausgezogen ist.

Die Auszüge 310 sind als Differenzialvollauszüge ausgestaltet und können einzeln entfernt werden, um sie zu reinigen. Durch die Ausgestaltung der Tür 110 sowie der Regalierung 300 kann der Kühlbetrieb in dem Kühlfach 140 aufrecht erhalten werden, selbst wenn einer der Auszüge 310 gereinigt werden muss, da dieser Auszug einfach entfernt wird und die Tür danach verschlossen wird.

Der Boden des Kühlfaches 140 ist vorzugsweise (leicht) angeschrägt ausgestaltet. Dieser Boden kann zu der Vorderfront des Kühlmöbels geneigt ausgestaltet sein, so dass Flüssigkeit, welche auf den Boden tropft, nach vorne abläuft. Ferner können entsprechende Abläufe auf der Vorderseite vorgesehen werden, so dass die Flüssigkeit ablaufen kann.

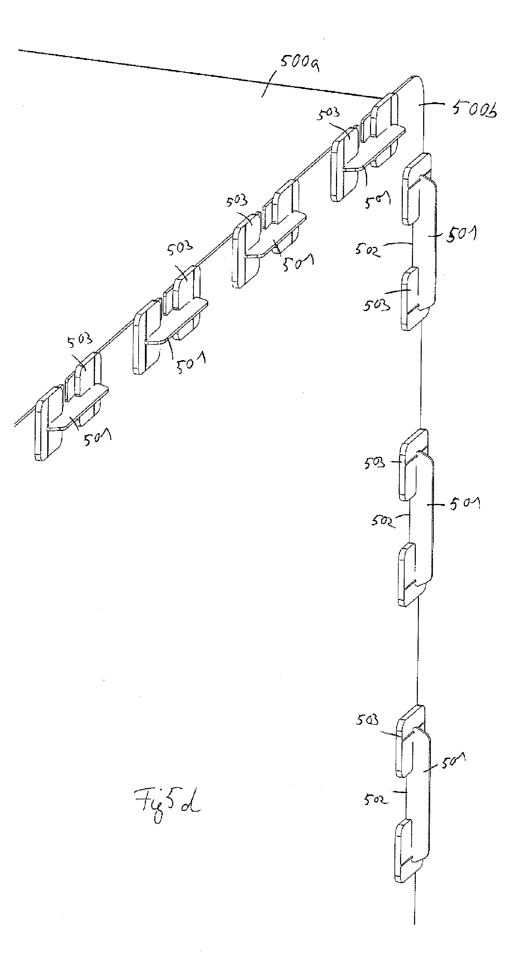

Fig. 3a zeigt eine perspektivische Ansicht eines Rahmens der Regalierung von Fig. 2e. Dieser selbsttragende Rahmen weist zwei Vorderfüße 302 und zwei hintere Füße 303 auf. Die beiden Seitenwände des Rahmens werden im Wesentlichen durch Querstreben 304 ausgebildet. Die eine Seitenwand weist eine Leiste 306a auf, welche bei der zweiten Seitenwand 306b nicht vorhanden ist. Die beiden Seitenwände sind durch die Rückwand 305 miteinander verbunden. Vorzugweise wird der selbsttragende Rahmen aus einem Stück gefertigt. Die Querstreben 304 weisen vorzugsweise jeweils zwei Öffnungen 307 auf.

Die Vorderfüße 302 und die hinteren Füße 303 sind dabei derart ausgestaltet, dass sie eine etwaige Neigung des Bodens des Kühlmöbels derart ausgleichen, dass die Querstreben 304 waagerecht ausgerichtet sind.

Der Rahmen 305 der Regalierung wird vorzugsweise aus einem Stück gefertigt. Dies hat insbesondere den Vorteil, dass eine Zusammenfügung von unterschiedlichen Blechteilen nicht erforderlich ist. Somit entstehen auch keine Ecken, Kanten oder dergleichen, welche die Hygiene der Regalierung beeinträchtigen können. Somit wird ein Absetzen bzw. Ausbilden von Bakterien oder Pilzen in Ecken oder Spalten verhindert. Sowohl in den Seitenwänden als auch an der Rückwand sind größere Öffnungen zwischen den Querstreben vorhanden, um eine Zirkulierung zu gewährleisten, damit der Kühlbetrieb entsprechend in dem Kühlfach aufrecht erhalten werden kann.

Die Öffnungen 307 dienen dazu, ein Stecksystem für die Auszüge aufzunehmen.

Die vorderen Füße 302 sind beispielsweise ca. 2 cm länger als die hinteren Füße 303, um einen schrägen Boden des Kühlmöbels auszugleichen. Alternativ dazu können die vorderen und/oder die hinteren Füße 302, 303 höhenverstellbar ausgestaltet sein, so dass der Rahmen an die jeweiligen Bedingungen in dem Kühlmöbel angepasst werden kann.

Durch die Ausgestaltung der Regalierung befindet sich die Regalierung mit den möglichen Auszügen komplett hinter der Tür 110 des Kühlmöbels. Die Abkantung 306a wird auf der Seite vorgesehen, wo der Drehpunkt der Tür vorgesehen ist. Die Abkantung 306a ist derart ausgestaltet, dass die Auszüge ohne Probleme bei geöffneter Tür 110 ausgezogen werden können.

Fig. 3b zeigt eine perspektivische Ansicht des Rahmens von Fig. 3a mit einigen Auszügen. In dem Rahmen 301 sind drei Vollauszüge 310 vorgesehen.

Fig. 3c zeigt eine perspektivische Ansicht des Rahmens von Fig. 3a mit einem Vollauszug 310. Der Vollauszug ist in die Öffnungen 307 der untersten Querstrebe 304 eingehakt.

Fig. 3d zeigt eine weitere perspektivische Ansicht des Rahmens von Fig. 3c. Der Vollauszug 310 ist vorzugsweise als Differenzialvollauszug ausgestaltet und weist eine Schublade 311, eine erste Führungsschiene 312 und eine Befestigungsschiene 314 auf. An der Außenseite der Befestigungsschiene 314 sind zwei Nasen 315a angeordnet, welche in den Öffnungen 307 in der Querstrebe 304 angeordnet werden können. In der Befestigungsschiene 314 wird die Führungsschiene 312 angeordnet. Auf der linken und rechten Seite der Schublade 311 sind zwei weitere Führungsschienen 313 angeordnet, welche mit der Führungsschiene 312 zusammenwirken, um den Auszug ausziehen zu können.

Die Schublade 311 wird vorzugsweise aus einem Stück Blech gefertigt, so dass wie bei dem Rahmen 305 Ecken und Kanten vermieden werden, um die Hygiene entsprechend zu verbessern, so dass die Reinigung vereinfacht wird. Im vorderen Bereich der Schublade sind vorzugsweise Öffnungen derart vorgesehen, dass Flüssigkeit über diese Öffnungen abfließen bzw. abtropfen kann. Somit kann verhindert werden, dass Flüssigkeit von einem oberen Aufzug in Schalen in einem unteren Aufzug tropfen bzw. fließen kann.

Die Öffnungen 315a können derart ausgestaltet sein, dass eine leichte Neigung der Befestigungsschiene 314 erreicht wird, so dass der Boden der Schublade 311 leicht geneigt ist und die sich darin befindliche Flüssigkeit nach vorne abfließen kann. Somit kann durch eine entsprechende Wahl der Arretierungspunkte 315a eine gewisse Neigung des Bodens der Schublade 311 erreicht werden.

Die Führungsschiene 313, 312 sowie die Befestigungsschiene 314 bilden zusammen mit der Schublade einen Differenzialvollauszug.

Fig. 3e zeigt eine weitere perspektivische Ansicht eines Rahmens mit drei Vollauszügen. In dieser Darstellung sind die einzelnen Komponenten der Vollauszüge 310 dargestellt. Ein Vollauszug 310 weist somit eine Befestigungsschiene 314, eine Führungsschiene 312, eine weitere Führungsschiene 313 sowie eine Schublade 311 auf. Die Schublade 311 weist zwei Seitenwände 311a auf, welche an unterschiedlichen Stellen an ihrer Oberseite Einkerbungen 311b aufweisen. Die Schublade weist ferner eine Vielzahl von Querstegen 311c auf, welche in die Einkerbungen 311b in den Seitenwänden der Schublade 311 einsteckbar sind.

Fig. 3f zeigt eine perspektivische Ansicht eines Vollauszuges von Fig. 3c. Der Vollauszug 310 weist eine Schublade 311, eine Befestigungsschiene 314, eine erste Führungsschiene 312 und eine zweite Führungsschiene 313 auf. Die Befestigungsschiene 314 weist zwei Nasen 315a, 315b auf, wobei eine der Nasen 315b in Längsrichtung der Schiene und eine der Nasen 315a quer zur Längsrichtung der Schiene ausgerichtet ist. Die Schublade 311 weist zwei Seitenwände 311a auf, welche eine Vielzahl von Kerben 311b an ihrer Oberseite aufweisen. In diese Kerben 311b können Querstege 311c eingesteckt werden, so dass die Querstege 311c herausnehmbar sind. Da jede der Seitenwände 311a der Schublade 311 eine Vielzahl von Einkerbungen 111b aufweist, sind verschiedene Einsteckmöglichkeiten für die Querstege 311c vorhanden.

Fig. 3g zeigt eine perspektivische Ansicht aller Bauteile des Vollauszuges 310. Die Seitenwand 311a der Schublade 311 weist zwei Öffnungen 311d auf, in welche die beiden Nasen 313a der zweiten Führungsschiene 313 eingeführt werden können, so dass die zweite Führungsschiene 313 in die Seitenwand 311a eingesteckt werden kann. Die Einkerbungen an der oberen Seite der Seitenwand 311a können eine unterschiedliche Länge aufweisen. Beispielsweise können die Einkerbungen an der Vorder- und Rückseite der Seitenwand 111a länger ausgestaltet sein als Kerbungen 311bb in der Mitte der Seitenwand 311a.

An den beiden Enden der Seitenwand ist jeweils ein Vorsprung vorgesehen, welcher die Einkerbung 311ba aufweist. Diese Vorsprünge dienen als Auflagepunkte für große Gastronorm-Behälter. Wenn kleinere Gastronorm-Behälter verwendet werden, bildet die obere Kante der Querstreben 311c die entsprechenden Auflagepunkte. Die in die Einkerbungen 311bb eingesteckten Querstreben bilden dann eine entsprechende Erhöhung und entsprechende Auflagepunkte für weitere Gastronorm-Schalen.

Die Querstege 311c weisen an ihren beiden Enden jeweils eine Einkerbung 311ca auf ihrer Oberseite und eine Einkerbung 311cb an ihrer Unterseite auf. Mittels dieser Einkerbungen können die Querstreben 311c in entsprechende Einkerbungen 311b in der Seitenwand 311a eingesteckt werden.

Die Querstege 311c sind an ihrer einen Seite glatt ausgestaltet und weisen lediglich zwei Einkerbungen 311ca auf. Auf der anderen Seite sind ebenfalls zwei Einkerbungen 311cb vorgesehen. Ferner sind an dieser Seite zwei Ausnehmungen 311ce vorhanden. Durch die Einkerbungen auf den beiden Seiten der Querstrebe kann die Querstrebe in zwei unterschiedliche Positionen in die Seitenwände 311a der Schublade 311 eingesteckt werden.

Die Ausgestaltung der Querstege 311c mit ihrer glatten Seite und den zwei Ausnehmungen 311ce dient dazu, dass unterschiedliche Gastronorm-Behälter aufgenommen werden können. Wenn die Querstreben 311c mit den beiden Ausnehmungen 311ce nach oben in die Einkerbungen an den Seitenwänden der Schublade eingesteckt werden, so können Gastronorm-Schalen mit Fallgriffen verwendet werden, da die Fallgriffe in den Ausnehmungen 311ce Platz finden, wenn die Schale auf den Querstegen 311c platziert wird.

Mit der Ausgestaltung der Schublade sowie der Querstege können die drei verschiedenen Gastronorm-Schalen, nämlich Schalen mit feststehenden Griffen nach oben, Schalen ohne Griffe und Schalen mit Fallgriffen, eingesetzt werden. Dies wird dadurch erreicht, dass die Querstege entweder mit ihrer glatten Seite nach unten oder mit ihrer glatten Seite nach oben eingesteckt werden.

Fig. 3h zeigt eine weitere perspektivische Ansicht der Elemente des Auszuges 310. Wie bereits in Fig. 3h gezeigt, weist die Seitenwand 311a der Schublade 311 verschiedene Einkerbungen 311ab, 311bb auf, welche eine unterschiedliche Tiefe aufweisen können. An den beiden Enden der Seitenwand 311a kann die Seitenwand höher ausgestaltet sein.

Fig. 3i zeigt eine perspektivische Ansicht der Schublade von Fig. 3d. Die Schublade weist zwei Seitenwände 311a auf, welche zum einen Öffnungen 311d und zum anderen Einkerbungen 311ba, 311bb aufweisen. Ferner weist die Schublade einen Boden 311f auf. Die Öffnungen dienen dazu, die Führungsschiene 313 aufzunehmen, d h. die Führungsschiene 313 weist zwei Nasen auf, durch welche die Führungsschiene in die Seitenwände 311a gesteckt werden kann.

Durch die oben beschriebene Ausgestaltung der Regalierung können die Schublade 311 sowie die entsprechenden Führungen 313, 312 und 314 komplett auseinander gebaut bzw. auseinander gesteckt werden, so dass die Regalierung auf einfache Art und Weise beispielsweise in einer Geschirrspülmaschine gereinigt werden kann.

Die oben beschriebene Neigung des Bodens 311f kann zum einen dadurch erreicht werden, dass die Schienen 313, 312, 314 leicht nach vorne geneigt ausgestaltet sind. Alternativ dazu kann der Abstand zwischen der Öffnung 311d und der Unterkante der Schublade vorne größer ausgestaltet sein als hinten, so dass eine leichte Neigung des Bodens 311f erreicht wird. Somit kann die Flüssigkeit nach vorne laufen und durch die Öffnungen im vorderen Bereich abtropfen bzw. abfließen.

Die oben beschriebenen Auszüge sind somit als Stecksystem ausgestaltet, so dass sie auf einfache Art und Weise gereinigt werden können.

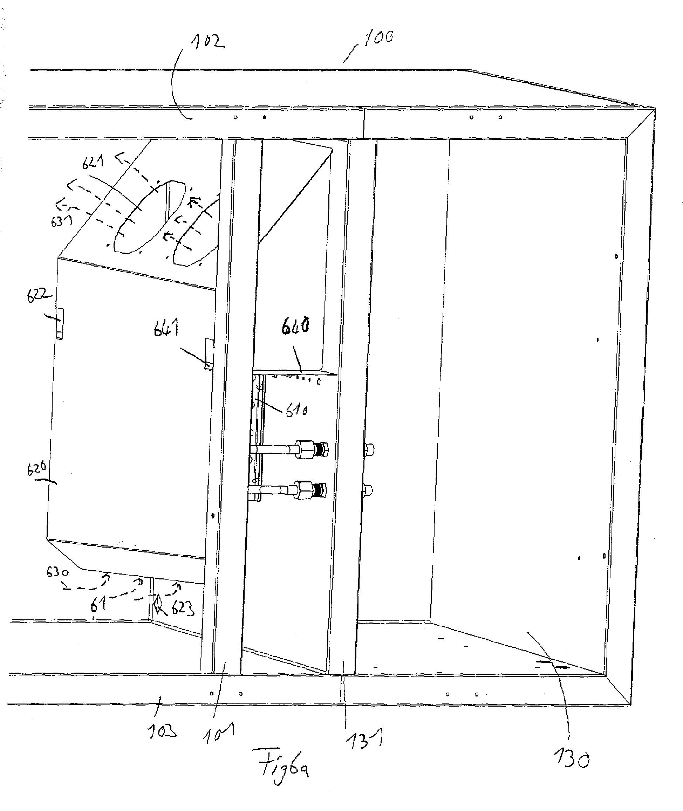

Fig. 4a zeigt eine perspektivische Ansicht eines Rahmens für eine Regalierung gemäß einem vierten Ausführungsbeispiel. Der Rahmen 401 weist eine Rückwand 405 sowie zwei Seitenwände auf, welche im Wesentlichen aus Querstreben 404 ausgebildet sind. Der Rahmen weist zwei Vorderfüße 402 und zwei hintere Füße 403 auf. Die Vorderfüße 402 und die hinteren Füße sind derart ausgestaltet, dass sie eine etwaige Neigung des Bodens des Kühlfaches derart ausgleichen können, dass die Kanten der Querstreben waagerecht ausgerichtet sind. Die Querstreben 404 weisen jeweils zwei nach innen gebogene Kanten 404a auf.

Der Rahmen 405 der Tablettregalierung ist vorzugsweise einstückig ausgestaltet und weist Öffnungen zwischen den Querstreben auf, damit eine entsprechende Luftzirkulierung gewährleistet werden kann. Die Füße 402, 403 können alternativ bzw. zusätzlich höherverstellbar ausgestaltet sein, so dass die Regalierung an unterschiedliche Neigungen des Bodens des Kühlmöbels angepasst ist.

Fig. 4b zeigt eine perspektivische Ansicht eines Rahmens von Fig. 4a mit drei Speisebehältern. Die Speisebehälter 415 weisen jeweils einen Rand 451 auf, mittels welchem die Speisebehälter 415 zwischen die Kanten 404a und 404b in den Rahmen 401 eingeschoben werden können. Diese Speisebehälter sind vorzugsweise Gastronorm-Behälter (GN-Behälter).

Fig. 4c zeigt eine perspektivische Ansicht einer Schublade gemäß dem dritten Ausführungsbeispiel mit einigen Speisebehältern. Die Schublade 311 weist zwei Seitenwände 311a mit sechs Querstreben 311c auf, welche in die Einkerbungen 311b eingesteckt sind. Hier sind sechs verschiedene Querstreben 311c in die beiden Seitenwände 311a eingesteckt. Somit können zwei Speisebehälter 450b (1/6 GN-Behälter) und sechs Speisebehälter 450a (1/9 GN-Behälter) in die Schublade eingesetzt werden.

Fig. 4d zeigt eine weitere Ansicht der Schublade gemäß dem dritten Ausführungsbeispiel mit einigen Speisebehältern. Hier sind lediglich vier Querstreben 311 gezeigt, so dass zwei Speisebehälter 450c (1/4 GN-Behälter) und ein Speisebehälter 450d (1/2 GN-Behälter) in der Schublade 311 aufgenommen werden können.

Fig. 4e zeigt eine weitere perspektivische Ansicht einer Schublade gemäß dem dritten Ausführungsbeispiel mit zwei Speisebehältern. Die Schublade 311 weist vier Querstege 311c auf, so dass ein Speisebehälter 450g (1/3 GN-Behälter) und ein Speisebehälter 450f (2/3 GN-Behälter) von der Schublade 311 aufgenommen werden können.

Fig. 4f zeigt eine weitere perspektivische Ansicht der Schublade gemäß dem dritten Ausführungsbeispiel. Hier sind ebenfalls vier Querstreben in die Seitenwände der Schublade 311 eingesteckt, um zwei Speisebehälter 450h (1/2 GN-Behälter) aufzunehmen.

Während in der Fig. 4c und 4d die Querstege 311c mit ihrer glatten Seite nach oben in die Seitenwände 311a eingesteckt sind, sind die Querstege 311c mit ihrer glatten Seite in Fig. 4e und 4f nach unten eingesteckt. Somit wird ein Zwischenraum zwischen dem Rand der Speisebehälter 450f bis 450h und dem Quersteg 311c ausgebildet, so dass die Speisebehälter einfacher aus der Schublade 311 entfernt werden können.

Fig. 4g zeigt eine perspektivische Ansicht der Schublade gemäß dem dritten Ausführungsbeispiel mit zwei Speisebehältern. Hier sind lediglich zwei Querstege 311c mit ihrer glatten Seite nach oben in die Seitenwände der Schublade 311 eingesteckt, so dass die beiden Speisebehälter 450i (2/4 GN-Behälter) in der Schublade 311 aufgenommen werden können.

Fig. 4h zeigt eine weitere perspektivische Ansicht der Schublade mit vier Speisebehältern. Hier sind vier Querstege 311 gezeigt, so dass drei Speisebehälter 450a und ein Speisebehälter 450d in der Schublade aufgenommen werden können.

Fig. 4i zeigt eine weitere perspektivische Ansicht einer Schublade mit einem einzigen Speisebehälter. Hier sind lediglich zwei Querstege 311c in die Seitenwände der Schublade 311 eingesteckt, so dass ein einziger großer Speisebehälter 450j (1/1 GN-Behälter) in der Schublade aufgenommen werden kann. Die Querstege 311c sind hierbei mit ihrer glatten Seite nach unten eingesteckt, so dass zwei Öffnungen zwischen den Querstegen und dem Speisebehälter vorhanden sind, wodurch der Speisebehälter besser gegriffen werden kann.

Fig. 4j zeigt eine weitere perspektivische Ansicht einer Schublade mit einer Vielzahl von Speisebehältern. In diesem Beispiel sind sechs Querstreben 311c mit ihrer glatten Seite nach oben in die Seitenwände der Schublade 311 eingesteckt, so dass zwei Speisebehälter 450b, drei Speisebehälter 450a und ein Speisebehälter 450g in der Schublade aufgenommen werden können.

Alle Schnittkanten des Vollauszuges sowie des Rahmens sind abgerundet. Alle gezeigten Elemente schließen mit der Vorderkante des Korpusses des Kühlmöbels ab. Die in den Fig. 4c bis 4j gezeigten Speisebehälter stellen 1/1, 1/2, 1/4, 2/4, 2/3, 1/3, 1/6 und/oder 1/9 Speisebehälter gemäß der Gastronorm dar. Durch die variablen Einsteckmöglichkeiten der Querstege können die unterschiedlichen Speisebehälter gemäß der Gastronorm in der Schublade 311 aufgenommen werden.

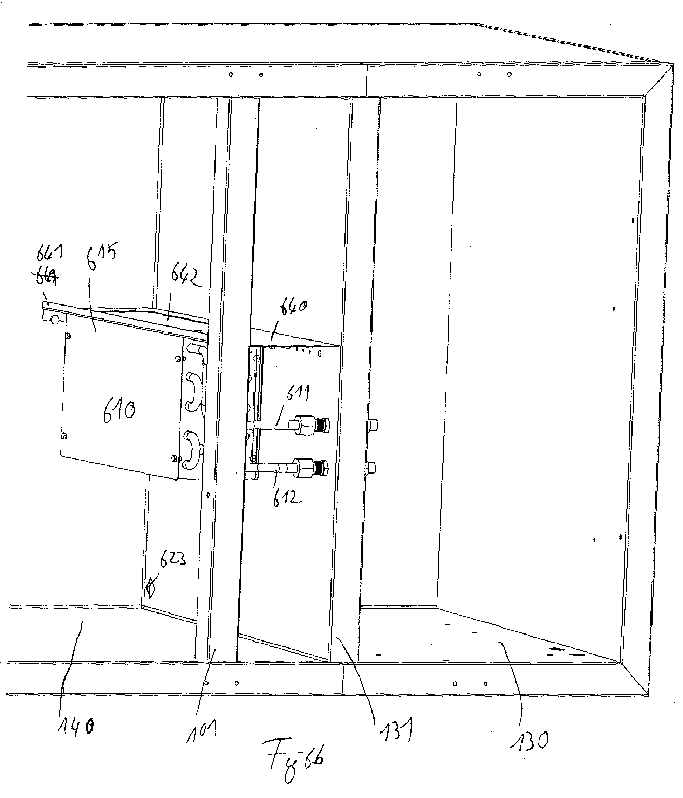

Fig. 5a zeigt eine perspektivische Ansicht eines Ausschnittes des Kühlmöbels von Fig. 2 gemäß einem fünften Ausführungsbeispiel. In Fig. 5a ist insbesondere die Verbindung zwischen zwei Blechteilen des Kühlmöbels von Fig. 2a gezeigt. Hierbei weist eines der Blechteile mindestens einen Vorsprung 501 auf, welcher vorzugsweise als eine Doppelknagge ausgebildet ist. Die Doppelknagge 501 wird in entsprechende Ausnehmungen 502 eines weiteren Blechteiles eingeführt und mittels eines Formteiles 503 verkeilt. Das Formteil 503 weist vorzugsweise einen Wulst 503a auf, welcher mit einer Ausnehmung in der Knagge 501a derart zusammenwirkt, dass das Formteil nicht herausfallen kann.

Dieses Knaggensystem wird dazu verwendet, einen Formschluss zwischen zwei Blechen herzustellen, welcher ohne zu schweißen dicht ist. Die Formteile 503 sind vorzugsweise aus Kunststoff hergestellt. Die Ausgestaltungen der Knaggen, der Ausnehmungen sowie der Formteile können zum formschlüssigen Verbinden von Blechteilen sowohl im Bereich von Kühlmöbeln als auch im Bereich von anderen Möbeln oder Bereichen verwendet werden. Mit dieser Ausgestaltung können hohe Genauigkeiten von bis zu 1/10 mm erreicht werden.

In Fig. 5a sind die Formteile 503 als Trennstege ausgestaltet, so dass ein Spalt zwischen den zu verbindenden Blechteilen entsteht. Somit wird ein Hohlraum geschaffen, welcher beispielsweise durch einen Schaum gefüllt wird, um somit eine Isolierung zu erreichen. Somit kann beispielsweise gewährleistet werden, dass eine Isolierung zwischen zwei unterschiedlichen Temperaturbereichen erfolgt.

Fig. 5b zeigt eine weitere Ansicht einer perspektivischen Darstellung eines Ausschnitts einer Verbindung von zwei Blechteilen. Das Blechteil 500a weist eine Doppelknagge 501 auf, während ein Blechteil 500b eine entsprechende Ausnehmung 502 aufweist. Die Knagge 501 wird durch die Ausnehmung 502 hindurchgeschoben und mittels zwei Formteilen 503 und insbesondere mittels der Wülste 503a und den Ausnehmungen 501a in der Knagge miteinander verkeilt.

Fig. 5c zeigt eine Schnittansicht der Verbindungsstelle von Fig. 5b. Die Knagge 501 wird durch eine Ausnehmung 502 in einem weiteren Blechteil geführt und mittels der Formstücke 503 verkeilt. Insbesondere wirkt die Ausnehmung 501a der Knaggen mit dem Formteil der Wulst 503a des Formteiles 503 zusammen, um die beiden Blechteile 500a, 500b miteinander zu verkeilen.

Fig. 5d zeigt eine perspektivische Ansicht einer Verbindungsstelle zwischen zwei Blechteilen. Das erste Blechteil 500a weist eine Vielzahl von Knaggen 501 auf, während das zweite Blechteil 500b eine Vielzahl von entsprechenden Ausnehmungen 502 aufweist. Die Knaggen 501 des Blechteiles 500a werden in die Ausnehmungen 502 des Blechteiles 500b eingeführt und mittels der Formteile 503 verkeilt, so dass die beiden Blechteile miteinander verbunden werden.

Es sei hier ausdrücklich darauf hingewiesen, dass die in der Fig. 3a bis 3i beschriebene Regalierung mit den Auszügen sowohl im Kühlmöbelbereich als auch als Trockenteile in nicht gekühlten Möbeln eingesetzt werden können. Entsprechendes gilt für die Ausgestaltung der Schubladen gemäß den Fig. 4c bis 4i und die Ausgestaltung der Knaggen gemäß den Fig. 5a bis 5d.

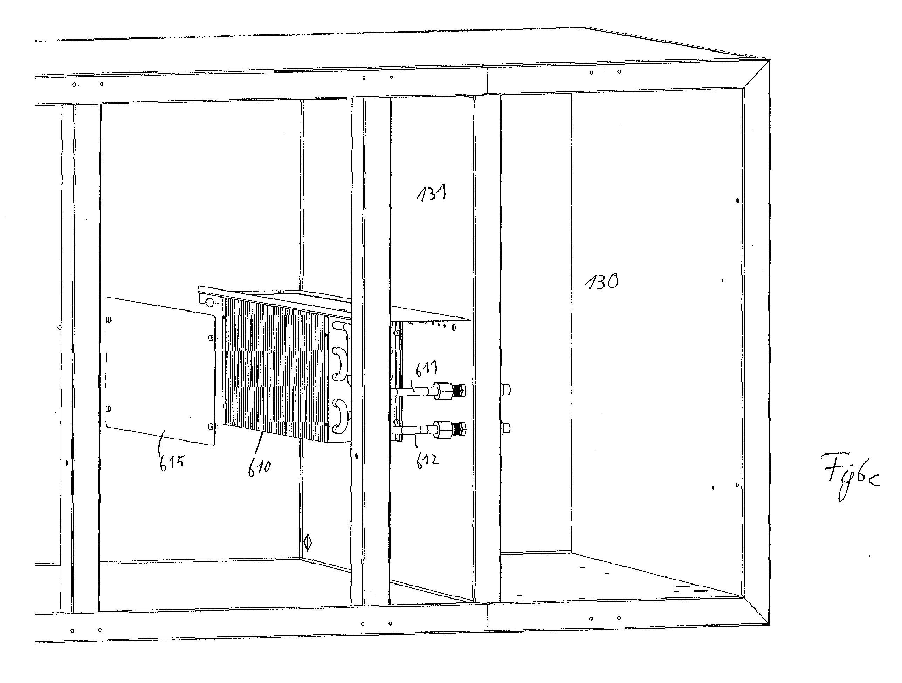

Fig. 6a zeigt einen Abschnitt des Kühlmöbels von Fig. 2b. In Fig. 6a ist ein Verdampfer 610 an der Zwischenwand 131 der Seite des Kühlfaches montiert. Über dem Verdampfer 610 wird ein Blechteil 620 montiert, welches zum Schutz des Verdampfers und als Luftleitblech dient. Das Blech weist zwei Öffnungen 621 an seiner Oberseite auf.

Somit wird Luft 630 von der unteren Seite des Luftleitbleches 620 angesaugt, strömt durch den Verdampfer 610 und tritt durch die Öffnungen 621 wieder aus.

Das Luftleitblech 620 weist zwei Ausnehmungen 622 auf, welche dazu ausgestaltet sind, dass das Luftleitblech 620 auf eine Abkantung 641 eines Verdampferhaltebleches 640 aufgesteckt wird. Somit kann das Luftleitblech 620 auf einfache Art und Weise zur Reinigung abgenommen werden.

Fig. 6b zeigt eine weitere Ansicht des Abschnitts von Fig. 6a. Hier ist der Verdampfer 610 ohne das Schutzblech 620 gezeigt. Der Verdampfer 610 ist auf der Zwischenwand 131 montiert. Die beiden Anschlüsse des Verdampfers 611 und 612 werden durch die Zwischenwand 131 geführt, so dass diese Anschlüsse von dem Maschinenfach 130 aus zugängig sind.

Das Halteblech 640 weist eine Öffnung 642 auf, durch welche die Luft 630 hindurchströmen kann.

Somit ist sowohl das Luftleitblech 620 als auch das Schutzblech 650 abnehmbar ausgestaltet, so dass es ohne Weiteres gereinigt werden kann. Wenn die Anschlüsse 611 und 612 gelöst sind, kann der Verdampfer somit ohne Weiteres entfernt werden. Die Leitung 611 stellt die Druckleitung dar, und die Leitung 612 stellt die Saugleitung dar. In der Zwischenwand 131 ist ein Durchbruch 623 vorgesehen. Wenn eine Kältemaschine in dem Kühlmöbel vorhanden ist, dann fließt Kondenswasser durch den Durchbruch 623 in das Maschinenfach und wird dort verdunstet. Dazu kann eine Tauwasserverdunstungsschale in dem Maschinenfach vorgesehen sein.

Wenn das Kühlmöbel jedoch nicht über eine eigene Kältemaschine verfügt, so kann davon abgesehen werden, einen Durchbruch vorzusehen. Im vorderen Bereich des Kühlmöbels können Öffnungen vorgesehen werden, so dass das Wasser entsprechend entsorgt werden kann.

Fig. 6c zeigt eine weitere Ansicht des Abschnitts von Fig. 6b. Hier ist der Verdampfer 610 ohne das weitere Schutzblech 615 gezeigt. Die Anschlüsse 611 und 612 werden durch die Zwischenwand 131 geführt, so dass sie von dem Maschinenfach 130 aus zugängig sind.

Durch die Ausgestaltung des Verdampfers 610 sowie des Schutzbleches 620 in dem Kühlfach 140 kann auf einfache Art und Weise verhindert werden, dass offen gelagerte Lebensmittel in Kontakt mit dem Verdampfer kommen und diesen verunreinigen. Die Funktionselemente der Kältemaschine werden in dem Maschinenfach 130 angeordnet, während der Verdampfer in dem Kühlfach auf der Trennwand 131 montiert wird, so dass das Maschinenfach 130 durch die Trennwand 131 von dem Kühlfach 140 getrennt ist. Durch diese Trennwand 131 wird der Raum, in dem die Lebensmittel gelagert werden, von dem Raum, in dem die Technik installiert ist, getrennt. Durch die Dichtung 111 wird der Maschinenraum 130 durch eine vollkommen eigenständige Dichtung abgedichtet, wenn die Tür 110 verschlossen wird. Die Dichtung 112 dient dazu, den Raum zwischen der Strebe 101 und der Zwischenwand 131 abzudichten. Somit wird ebenfalls eine sichere Abdichtung des Kühlfaches gewährleistet.

Die Montage und Demontage des Verdampfers 610 kann bei geöffneter Maschinenfachtür durchgeführt werden. Der Verdampfer 610 wird seitlich an der Trennwand 131 installiert. Die Gas- und Flüssigkeitsleitungen bzw. Anschlüsse 611, 612 werden von vorne verschraubt. Das Schutzblech bzw. das Luftleitblech 620 weist einen Umlaufventilator auf. Der Tauwasserkanal sowie die Tauwasserschale werden unter dem Verdampfer angeordnet.

Wenn der Verdampfer gereinigt werden muss, so wird die Tür des Maschinenfaches 130 geöffnet. Anschließend wird das Luftleitblech 620 und der Umluftventilator demontiert. Danach wird der Tauwasserkanal und die Tauwasserschale herausgenommen. Der Verdampfer sowie die angrenzenden Teile werden mit einem Reinigungsmittel eingesprüht und vorzugsweise mit klarem Wasser gereinigt. Über den angeschrägten Boden des Kubusses fließt das Waschwasser nach vorne heraus. Ferner kann mittels eines Wischziehers das restliche Wasser entfernt werden.

Mit dem oben beschriebenen Verdampfer wird der Einbau und der Ausbau wesentlich vereinfacht, da die entsprechenden Verschraubungen vorne angeordnet sind. Ferner ist dieser Verdampfer komplett auf einfache Art und Weise zu reinigen.

## Patentansprüche

1. Möbel zur Aufnahme von Lebensmitteln und/oder hygienekritischen Gütern, mit
einem Boden (50) und mindestens einer Seitenwand (30, 40), und
einem Material (61) an den Übergängen (60) zwischen dem Boden (50) und den Seitenwänden (30, 40),
wobei das Material (61) auf einem silanmodifizierten Polymer basiert und im Wesentlichen geruchs- und geschmacksneutral ist.

2. Möbel nach Anspruch 1, wobei das Material (61) derart an dem Übergang (60) aufgebracht wird, dass ein Übergangsradius von größer als R3 vorgesehen wird.

3. Möbel zur Aufnahme von Lebensmitteln und/oder hygienekritischen Gütern, insbesondere nach Anspruch 1, mit
einem geneigten Boden (50), wobei der Boden vorzugsweise nach vorne geneigt ausgebildet ist.

4. Möbel, insbesondere zur Aufnahme von Lebensmitteln und/oder hygienekritischen Gütern, insbesondere nach Anspruch 1 oder 3, mit
einem Kühlfach (140), einem Maschinenfach (130) und einer dazwischen angeordneten Trennwand (131), und
einer Tür (110), welche sowohl das Maschinenfach (130) als auch das Kühlfach (140) zumindest teilweise verschließt,
wobei die Tür (110) auf ihrer Innenseite eine erste Dichtung (111) und eine zweite Dichtung (112) aufweist, wobei die erste Dichtung (111) derart angeordnet ist, dass sie das Maschinenfach (130) abdichtet, und wobei die zweite Dichtung (112) derart angeordnet ist, dass sie das Kühlfach (140) zumindest teilweise abdichtet.

5. Regalierung, insbesondere für ein Möbel zur Aufnahme von Lebensmitteln und/oder hygienekritischen Gütern, mit
einem einstückigen selbsttragenden Rahmen (301), welcher eine Rückwand (305) und zwei Seitenwänden aufweist, wobei die Seitenwände jeweils mehrere Querstreben (304) aufweisen,
wobei mindestens zwei Öffnungen (307) zur Aufnahme von Befestigungsschienen in mindestens zwei korrespondierenden Querstreben (304) in jeder der Seitenwände angeordnet sind.

6. Regalierung nach Anspruch 5, wobei der Rahmen (301) zwei vordere Füße (302) und zwei hintere Füße (303) aufweist, wobei sich die Länge der vorderen Füße (302) von der Länge der hinteren Füße (303) unterscheidet.

7. Regalierung nach einem der Ansprüche 5 und 6, ferner mit
mindestens einem Auszug (310), wobei der Auszug (310) eine einstückig ausgebildete Schublade (311), eine Befestigungsschiene (314) zum lösbaren Befestigen in den Löchern (307), eine erste Führungsschiene (312) und eine zweite Führungsschiene (313) aufweist.

8. Regalierung nach Anspruch 7, wobei die Schublade (311) eine erste und zweite Seitenwand (311a) aufweist, wobei die Seitenwand (311a) an ihrer oberen Seite mindestens zwei Einkerbungen (311b) aufweist,
ferner mit mindestens zwei Querstreben (311c), welche in die Einkerbungen (311b) eingesteckt werden können.

9. Regalierung nach Anspruch 8, wobei die Querstreben (311c) an ihren beiden Enden sowohl auf der ersten als auch auf der zweiten Seite jeweils eine Einkerbung (311ca, 311cb) aufweist, welche mit den Einkerbungen (311b) der Seitenwand (311a) korrespondieren.

10. Regalierung nach Anspruch 8 oder 9, wobei die Querstreben (311c) an mindestens einer Seite mindestens eine Ausnehmung (311ce) aufweisen.

11. Regalierung nach einem der Ansprüche 5 bis 10, wobei die Seitenwände (311a) der Schublade (311) an ihrem vorderen und hinteren Ende einen Vorsprung aufweisen.

12. Regalierung nach einem der Ansprüche 5 bis 11, wobei ein Boden (311f) der Schublade (311) nach vorne geneigt ausgestaltet ist.

13. Regalierung nach einem der Ansprüche 5 bis 12, wobei die Schublade (311) in ihrem vorderen unteren Bereich mindestens eine Öffnung aufweist.

14. Regalierung nach einem der Ansprüche 5 bis 13, wobei die Einkerbungen (311b) in der Seitenwand (311a) der Schublade (311) derart ausgestaltet sind, dass unterschiedliche Gastronorm-Behälter in der Schublade derart angeordnet werden können, dass sie auf den in den Einkerbungen (311b) eingesteckten Querstreben (311c) aufliegen.

15. Möbel, insbesondere nach einem der Ansprüche 1 bis 4, mit
einem ersten flächigen Element, welches mindestens eine Knagge (501) aufweist,
einem zweiten flächigen Element, welches mindestens eine Ausnehmung (502) aufweist, und
einem Formteil, welches zwischen einer durch die Ausnehmung (502) durchgesteckten Knagge (501) und dem zweiten flächigen Element derart angeordnet wird, dass das erste flächige Element formschlüssig mit dem zweiten flächigen Element verbunden wird.

16. Möbel nach Anspruch 15, wobei die Knagge eine Ausnehmung (501a) aufweist, und wobei das Formteil einen Wulst (503) aufweist, wobei die Ausnehmung (501a) mit dem Wulst (503a) zusammenwirkt, wenn die Knagge (501) durch die Ausnehmung (502) gesteckt wurde und das Formteil (503) dazu verwendet wird, die Knagge (501 gegen das zweite flächige Element festzukeilen.

17. Möbel, insbesondere zur Aufnahme von Lebensmitteln und/oder hygienekritischen Gütern, insbesondere nach einem der Ansprüche 1 bis 4 oder 15 bis 16, mit
einem Kühlfach (140), einem Maschinenfach (130), einer Trennwand (131) zum Trennen des Kühlfaches (140) von dem Maschinenfach (130), und
einem an der Trennwand (131) angeordneten Verdampfer (610), welcher über einen ersten und zweiten Anschluss (611, 612) mit dem Maschinenfach (130) verbunden ist.

18. Möbel nach Anspruch 17, ferner mit
einem ersten Halteblech, welches an seiner einen Seite mit der Trennwand (131) verbunden ist und welches an seiner zweiten Seite eine Aufkantung aufweist, und
einem Luftleitblech (620), welches auf die Aufkantung des Haltebleches aufgesteckt wird.

19. Schubladeneinheit, insbesondere zur Aufnahme von Lebensmitteln und/oder hygienekritischen Gütern, mit
einer ersten und zweiten Seitenwand (311a), wobei die Seitenwand (311a) an ihrer oberen Seite mindestens zwei Einkerbungen (311b) aufweist, und
mindestens zwei Querstreben (311c), welche in die Einkerbungen (311b) eingesteckt werden können.

20. Schubladeneinheit nach Anspruch 19, wobei die Querstreben (311c) an ihren beiden Enden sowohl auf der ersten als auch auf der zweiten Seite jeweils eine Einkerbung (311ca, 311cb) aufweist, welche mit den Einkerbungen (311b) der Seitenwand (311a) korrespondieren.

21. Schubladeneinheit nach Anspruch 19 oder 20, wobei die Querstreben (311c) an mindestens einer Seite mindestens eine Ausnehmung (311ce) aufweisen.

22. Schubladeneinheit nach einem der Ansprüche 19 bis 21, wobei die Seitenwände (311a) der Schublade (311) an ihrem vorderen und hinteren Ende einen Vorsprung aufweisen.

23. Schubladeneinheit nach einem der Ansprüche 19 bis 22, wobei ein Boden (311f) der Schublade (311) nach vorne geneigt ausgestaltet ist.

24. Schubladeneinheit nach einem der Ansprüche 19 bis 23, wobei die Schublade (311) in ihrem vorderen unteren Bereich mindestens eine Öffnung aufweist.

25. Schubladeneinheit nach einem der Ansprüche 19 bis 24, wobei die Einkerbungen (311b) in der Seitenwand (311a) der Schublade (311) derart ausgestaltet sind, dass unterschiedliche Gastronorm-Behälter in der Schublade derart angeordnet werden können, dass sie auf den in den Einkerbungen (311b) eingesteckten Querstreben (311c) aufliegen.
